# EUROPEAN PATENT SPECIFICATION

(11) **EP 3 313 038 B1**
(45) Date of publication and mention of the grant of the patent: **30.10.2019**
(21) Application number: 15895423.0
(22) Date of filing: 27.10.2015
(51) Int. Cl.: H04L 29/06, H04L 29/08, H04L 29/12

(54) **METHOD AND APPARATUS FOR UPDATING INTERNET PROTOCOL (IP) ADDRESS, AND GATEWAY**
VERFAHREN UND VORRICHTUNG ZUR AKTUALISIERUNG DER ADRESSE DES INTERNETPROTOKOLLS (IP) UND GATEWAY
PROCÉDÉ ET APPAREIL POUR METTRE À JOUR UNE ADRESSE DE PROTOCOLE INTERNET (IP), ET PASSERELLE

(30) Priority: 18.06.2015 CN 201510342229
(43) Date of publication of application: 25.04.2018
(73) Proprietor: ZTE Corporation, Shenzhen, Guangdong 518057 (CN)
(72) Inventor: WENG, Jianqi, Shenzhen Guangdong 518057 (CN)
(74) Representative: CMS Cameron McKenna Nabarro Olswang LLP
(86) International application number: PCT/CN2015/092990
(87) International publication number: WO 2016/201854

(56) References cited:
- CN-A- 1 832 428
- US-A1- 2004 083 306
- US-A1- 2006 206 608
- US-A1- 2009 216 852
- US-A1- 2009 274 062
- US-A1- 2010 281 146
- VIXIE P ET AL: "Dynamic Updates in the Domain Name System (DNS UPDATE); rfc2136.txt", DYNAMIC UPDATES IN THE DOMAIN NAME SYSTEM (DNS UPDATE)?; RFC2136.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 April 1997 (1997-04-01), XP015007920,
- THOMSON BELLCORE T NARTEN IBM S: "IPv6 Stateless Address Autoconfiguration; rfc2462.txt", IPV6 STATELESS ADDRESS AUTOCONFIGURATION; RFC2462.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 December 1998 (1998-12-01), XP015008246,
- DROMS R ET AL: "Dynamic Host Configuration Protocol for IPv6 (DHCPv6); rfc3315.txt", DYNAMIC HOST CONFIGURATION PROTOCOL FOR IPV6 (DHCPV6)?; RFC3315.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 July 2003 (2003-07-01), XP015009185,
- NARTEN IBM E NORDMARK SUN MICROSYSTEMS W SIMPSON DAYDREAMER H SOLIMAN ELEVATE TECHNOLOGIES T: "Neighbor Discovery for IP version 6 (IPv6); rfc4861.txt", NEIGHBOR DISCOVERY FOR IP VERSION 6 (IPV6)?; RFC4861.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 September 2007 (2007-09-01), XP015052407,

## Description

### Technical Field

The present invention relates to the field of communications, and more particularly to a method and apparatus for updating an Internet Protocol (IP) address, and a gateway.

### Background

At present, Internet Protocol Version 6 (IPv6) network starts to be used gradually for commercial purposes, and an original Internet Protocol Version 4 (IPv4) service will be replaced with an IPv6 service gradually.

Gateway equipment in an IPv4 network, regardless of a home network gateway or a commercial network gateway, is entrance equipment for a user to access internet. A user server is usually arranged at these gateway Local Area Network (LAN) sides. Due to limited Internet Protocol (IP) addresses of the IPv4 network, a server at an LAN will use an IPv4 private network address, and the private network address of the server is translated into a public network address by means of a gateway Network Address Translation (NAT) technology, and then the server can be accessed the Internet. A public network user can access a server by actively accessing a public network address of the server and translating the public network address into the private network address of the server via the NAT technology. A public network address of a gateway frequently changes, thereby resulting in emergence of a Dynamic Domain Name Service (DDNS) technology. By means of the DDNS technology, the gateway will dynamically update a corresponding relationship between an own IP address and a domain name, and a public network user can access the gateway by accessing a fixed domain name, thus accessing a server at an LAN side with the aid of the NAT technology.

The above-mentioned method is a common application method in the IPv4 network. In the IPv6 network, neither the private network address nor the NAT technology is used for access of the server at the LAN side to the Internet, but the public network address is issued by the gateway and directly used by the server. Besides, generation of the public network address of the server at the LAN side derives from a prefix obtained by the gateway from a WAN side, and the public network address of the server at the LAN side will dynamically change, so that the address of the server will also dynamically change along with the change of time and environment. The inventor of the present invention finds out, in a research process, that the gateway and the server at the LAN side adopt different public network addresses respectively due to the fact that the gateway issues the public network address to the server to directly use, therefore an IP address update solution of the DDNS system in the IPv4 network is not suitable for the IPv6 network.

Any effective solution has not proposed yet at present for the problem in the related art of non-provision of a manner for updating an IP address of the LAN-side server in the DDNS server of the IPv6 network.

The document US 2009/0274062 A1 discloses a method for updating DNS of host in IPv6 stateless address auto-configuration, wherein an option is added in the RS message sent by a host and/or RA message sent by a router, said option including information for negotiation of updating DNS of host. Based on said information, the host negotiates with the router to determine whether the host or the router register, the mapping between the global address of the host and the full domain name of the host, to a DNS server, to complete updating the DNS of the host.

The document US 2004/0083306 A1 discloses that a host node connected to the Internet automatically generates an Internet interface addresses for itself, and automatically generates a request to an Internet domain name server to update the domain name server's database with the self-generated address.

The document US 2009/0216852 A1 discloses a system and method for synchronizing a dynamic domain name system (DDNS). Updated domain name information is received at a first datastore and sent to a second datastore. Updated domain name information is also received at the second datastore and sent to the first datastore. Either datastore determines whether the other datastore is available to receive the updated domain name information. If the receiving datastore is not available, the sending datastore waits until the receiving datastore is available. The first datastore is connected to a first master DNS server and the second datastore is connected to a second master DNS server. The first and second master servers share an IP address. When a request for domain name information is received at a router, the request is sent to a master DNS server selected from the first and second master DNS servers using the shared IP address.; A master DNS server is selected to respond to the DNS request only if that master server is able to respond to the request. The requested domain name information is retrieved from the datastore connected to the selected DNS server and a response to the request for domain name information is generated.

The document US 2006/0206608 A1 discloses an apparatus, program, and system that manages user terminal in an integrated fashion. User terminal management apparatus , for managing the plurality of user terminal group, comprised of information tables b, for storing prescribed user terminal information for each terminal in user terminal group, interface controller for receiving user terminal information transmitted from user terminal group , data analyzer for detecting whether prescribed information is included in the user terminal information received via interface controller, IPv6 address information controller, FW configuration information manager, and DDNS controller for performing registration/update/transmission of IP addresses and firewall configuration information based on user terminal information detected by data analyzer and user terminal information stored in the information tables.

### Summary

The invention is specified by the method and apparatus of the independent claims. Further embodiments are specified in the dependent claims.

### Brief Description of Drawings

The drawings illustrated herein are intended to provide a further understanding for the present invention, and form a part of the present application. The schematic embodiments and illustrations of the present invention are intended to explain the present invention, and do not form improper limits to the present invention. In the drawings:
FIG. 1 is a flowchart of a method for updating an IP address according to an embodiment of the present invention.
FIG. 2 is a structure diagram of an apparatus for updating an IP address according to an embodiment of the present invention.
FIG. 3 is an alternative structure diagram of an apparatus for updating an IP address according to an alternative embodiment of the present invention.
FIG. 4 is a topological network structure diagram of an apparatus for updating an IP address according to an alternative embodiment of the present invention.
FIG. 5 is a structure diagram of an apparatus for updating an IP address according to an alternative embodiment of the present invention.
FIG. 6 is a flowchart of a method for updating an IP address according to an alternative embodiment of the present invention.

### Detailed Description

The present invention will be illustrated in detail hereinbelow with reference to the drawings and in conjunction with the embodiments. It is important to note that the embodiments in the present application and the characteristics in the embodiments may be combined mutually under the condition of no conflicts.

Other features and advantages of the present invention will be elaborated in the following description, and become obvious partially from the description or are understood by implementing the present invention. The purposes and other advantages of the present invention can be implemented and obtained by means of structures specially pointed out in the description, the claims and the drawings.

To make a person skilled in the art better understand the solution of the present invention, the technical solution in embodiments of the present invention will be clearly and completely described hereinbelow with reference to the drawings in the embodiments of the present invention. It is apparent that the described embodiments are only a part of embodiments of the present invention, not all of the embodiments. On the basis of the embodiments of the present invention, all other embodiments obtained on the premise of no creative work of a person with ordinary skill in the art shall fall within the scope of protection of the present invention.

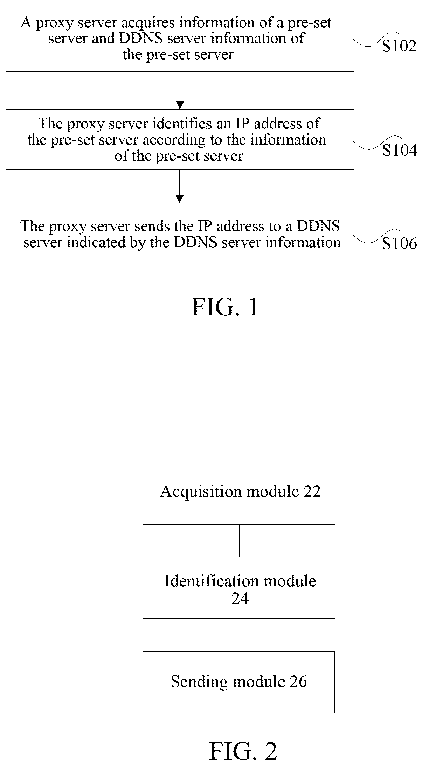

An embodiment of the present invention provides a method for updating an IP address. FIG. 1 is a flowchart of a method for updating an IP address according to an embodiment of the present invention. As shown in FIG. 1, the method includes the steps S102-S106 as follows.

In step S102, a proxy server acquires information of a pre-set server and DDNS server information of the pre-set server.

In step S104, the proxy server identifies an IP address of the pre-set server according to the information of the pre-set server.

In step S106, the proxy server sends the IP address to a DDNS server indicated by the DDNS server information.

By means of the above-mentioned steps, a proxy server is configured to send the information of the pre-set server to a DDNS server corresponding to the pre-set server, to update an IP address of the pre-set server in the DDNS server. Therefore, the problem in the related art of non-provision of a manner for updating an IP address of the LAN-side server in the DDNS server of the IPv6 network is solved, thereby implementing dynamic update of the IP address of the LAN-side server in the DDNS server of the IPv6 network. Meanwhile, compared with a manner for updating an IP address by directly using a pre-set server, a manner for updating an IP address by using a proxy server alleviates loads of the pre-set server, reduces the complexity of a migration process of a server from an IPv4 to an IPv6, and also reduces the cost of the migration process of the server from the IPv4 to the IPv6.

It is important to note that a gateway may serve as the above-mentioned proxy server, to implement update of an IP address of a pre-set server connected to the gateway.

When the proxy server acquires information of the pre-set server and DDNS server information of the pre-set server, the identity of the pre-set server and the DDNS server corresponding to the pre-set server may be matched. In an exemplary embodiment, the information of the pre-set server includes a MAC address of the pre-set server, and the DDNS server information includes address information of the DDNS server. The pre-set server may be identified according to the MAC address of the pre-set server, and an address of the DDNS server is determined according to the address information of the DDNS server.

In an exemplary embodiment, to improve the security, the information of the pre-set server further includes information for identity authentication on the DDNS server. After identity authentication is performed through the identity authentication information, an operation of updating the IP address can be executed with the DDNS server.

In an exemplary embodiment, the information of the pre-set server may further include a domain name of the pre-set server registered on the DDNS server. A domain name of the pre-set server and an IP address corresponding to the domain name may be stored on the DDNS server. Under the condition that the IP address of the pre-set server changes, it is required to update the IP address corresponding to the domain name. Therefore, after the domain name of the pre-set server registered on the DDNS server is obtained, through the domain name the DDNS server may be requested for update of the IP address corresponding to the domain name. It is important to note that the information of the pre-set server may not include domain name information of the pre-set server registered on the DDNS server. At this time, mapping information between the MAC address and the domain name may be stored on the proxy server or the DDNS server, so the name information of the pre-set server registered on the DDNS server can be determined according to the MAC address information of the pre-set server in the information of the pre-set server, thus updating the IP address corresponding to the domain name.

In an exemplary embodiment, in the step S102, contents required to be configured may be shown (for example, in a webpage form) to a user to acquire configuration information input by the user, or information is acquired directly in an automatic configuration manner. That is, the proxy server acquires the information of the pre-set server and the DDNS server information of the pre-set server in a manner of receiving user input or the automatic configuration manner.

For example, under the condition that the proxy server acquires information of the pre-set server and DDNS server information of the pre-set server in an automatic configuration manner, automatic configuration of the information of the pre-set server and the DDNS server information of the pre-set server may be implemented through a DHCPv6 protocol or a Route Advertisement (RA) protocol. For example, the proxy server receives a DHCPv6 packet (such as a DHCPv6 OPTION packet) or an RS packet. Herein the DHCPv6 packet or the RS packet carries the information of the pre-set server and the DDNS server information of the pre-set server.

In step S106, according to demands of the DDNS server the proxy server may replace a source address of a packet that carries an IP address and will be sent to the DDNS server with an address of the pre-set server, and then send the packet of which the source address is replaced to the DDNS server. In this manner, compatibility of different protocols interacting with the DDNS server may be implemented.

In an exemplary embodiment, in the step S104, the proxy server identifies the IP address of the pre-set server through an ND protocol or the DHCPv6 protocol.

In the present embodiment, an apparatus for updating an IP address is also provided. The apparatus may be applied to a proxy server, and configured to implement the above-mentioned embodiments and alternative implementation manners. Those which have been illustrated will not be elaborated herein. Modules involved in the apparatus will be illustrated hereinbelow. Just as used below, a term 'module' may implement a combination of software and/or hardware with predetermined functions. Although the apparatus described by the following embodiments is better implemented by software, the implementation of hardware or the combination of software and hardware may be possible and conceived.

FIG. 2 is a structure diagram of an apparatus for updating an IP address according to an embodiment of the present invention. As shown in FIG. 2, the apparatus may include an acquisition module 22, an identification module 24 and a sending module 26. Herein, the acquisition module 22 is configured to acquire information of a pre-set server and DDNS server information of the pre-set server. The identification module 24 is coupled to the acquisition module 22 and is configured to identify an IP address of the pre-set server according to the information of the pre-set server. The sending module 26 is coupled to the identification module 24 and is configured to send the IP address to a DDNS server indicated by the DDNS server information.

In an exemplary embodiment, the information of the pre-set server acquired in the acquisition module 22 includes a MAC address of the pre-set server, and the DDNS server information includes address information of the DDNS server.

In an exemplary embodiment, the information of the pre-set server acquired in the acquisition module 22 further includes a domain name of the pre-set server registered on the DDNS server; and/or the DDNS server information further includes information for identity authentication on the DDNS server.

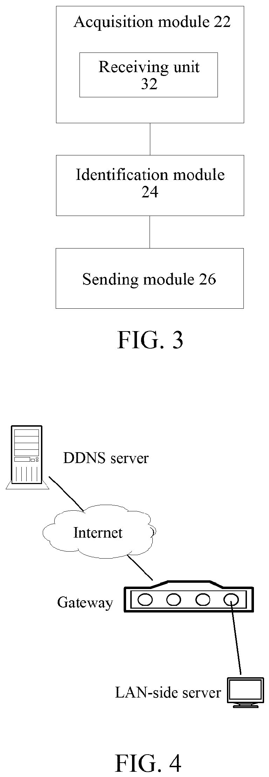

FIG. 3 is an alternative structure diagram of an apparatus for updating an IP address according to an alternative embodiment of the present invention. As shown in FIG. 3, in an exemplary embodiment, the acquisition module 22 includes a receiving unit 32, configured to acquire information of the pre-set server and DDNS server information of the pre-set server in a manner of receiving user input or an automatic configuration manner.

In an exemplary embodiment, the receiving unit 32 is configured to receive a DHCPv6 packet or an RS packet. Herein, the DHCPv6 packet or the RS packet carries the information of the pre-set server and the DDNS server information of the pre-set server.

In an exemplary embodiment, the sending module 26 is configured to replace a source address of a packet which will be sent to the DDNS server with an address of the pre-set server, herein the packet carries the IP address; and the proxy server sends the packet of which the source address is replaced to the DDNS server.

In an exemplary embodiment, the identification module 24 is configured to identify the IP address of the pre-set server through an ND protocol or the DHCPv6 protocol.

An embodiment of the present invention also provides a gateway including the above-mentioned apparatus for updating an IP address.

In addition, various function units in various embodiments of the present invention may be integrated in a processing unit, or each unit may exist separately and physically, or two or more units may be integrated in a unit. The integrated unit may be implemented in a form of hardware or may be implemented in a form of a software function unit.

To more clearly describe embodiments of the present invention, an alternative embodiment will be added for description and illustration hereinbelow.

An alternative embodiment of the present invention provides an apparatus for updating an IP address, used to dynamically update a domain name of an LAN-side server (equivalent to the above-mentioned pre-set server) connected to a gateway (capable of implementing functions of the above-mentioned proxy server), such that the LAN-side server can use a DDNS service of an IPv6 without a DDNS capability.

FIG. 4 is a topological network structure diagram of an apparatus for updating an IP address according to an alternative embodiment of the present invention. As shown in FIG. 4, an LAN-side server is connected to the Internet via a gateway, and a DDNS server is also connected to the Internet.

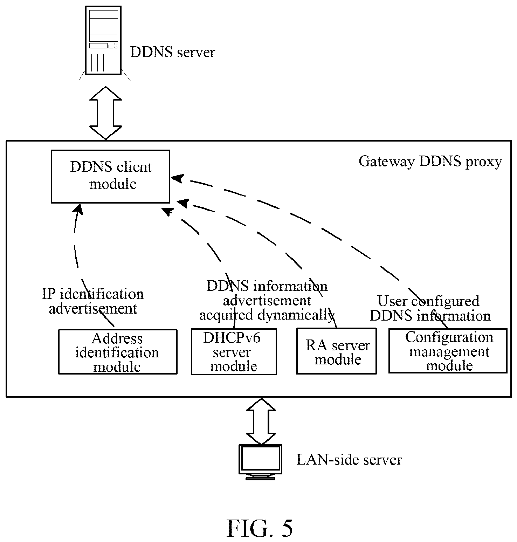

FIG. 5 is a structure diagram of an apparatus for updating an IP address according to an alternative embodiment of the present invention. As shown in FIG. 5, the apparatus for updating an IP address provided in the alternative embodiment of the present invention includes the following modules.

A configuration management module (equivalent to the above-mentioned acquisition module 22) is configured to show information to a user by using a Webpage or other media forms, such that a user can manually configure DDNS information of an LAN-side server. The configurable information includes, but not limited to, a MAC address of the LAN-side server, DDNS domain name server information, a DDNS authentication user name and password, and a DDNS domain name.

A DDNS client module (equivalent to the above-mentioned sending module 26) is configured to maintain DDNS-related information of the LAN-side server, and communicate with a DDNS server to complete update of an IP address corresponding to the domain name.

A DHCPv6 server module (equivalent to the above-mentioned acquisition module 22) is configured to acquire the DDNS-related information of the LAN-side server in the DHCPv6 dynamic manner, and provide the information for the DDNS client module. The acquirable information includes, but not limited to, the MAC address of the LAN-side server, the DDNS domain name server information, the DDNS authentication user name and password, and the DDNS domain name.

Or, an RA server module (equivalent to the above-mentioned acquisition module 22) is configured to acquire DDNS information thereof by receiving an RS packet of the LAN-side server, and provide the information for the DDNS client module. The acquirable information includes, but not limited to, the MAC address of the LAN-side server, the DDNS domain name server information, the DDNS authentication user name and password, and the DDNS domain name.

An address identification module (equivalent to the above-mentioned identification module 24) is configured to identify the IP address of the LAN-side server, and advertise the address to the DDNS client.

By means of the above-mentioned apparatus for updating an IP address, a server device connected to a gateway may provide DDNS-related information for the gateway, and then the gateway is in charge of updating an IP address corresponding to a domain name by proxy.

An alternative embodiment of the present invention also provides a method for updating an IP address, such that when using an IPv6 network, the server device connected to a gateway may also use DDNS service if DDNS client functions are not supported.

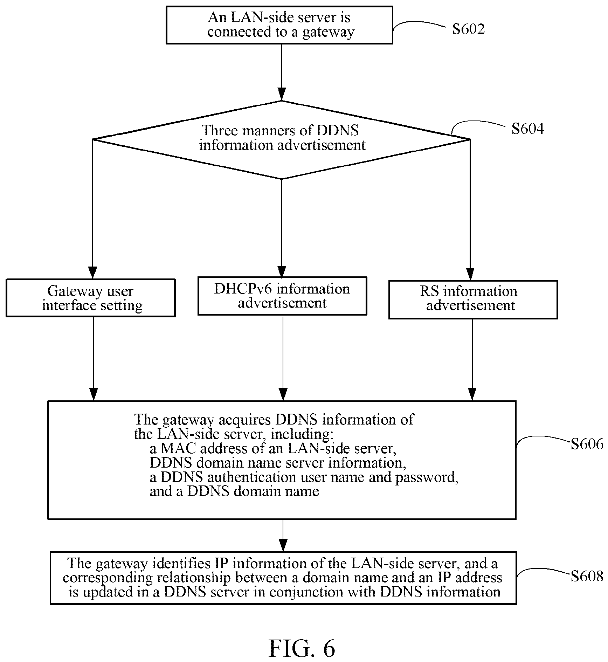

FIG. 6 is a flowchart of a method for updating an IP address according to an alternative embodiment of the present invention. As shown in FIG. 6, the method includes the steps S602-S610 as follows.

In step S602, a server is connected to an LAN side of a gateway, and the gateway is connected to the Internet via a correct configuration.

In step S604, then the gateway needs to know related information of a DDNS server, herein a server administrator may select three manners to advertise necessary information of DDNS to the gateway.
(1) The administrator performs configuration in a page of the gateway or a configuration medium (such as TR069) to provide information.
(2) The server served as a DHCPv6 client advertises the gateway by carrying DDNS-related information in a DHCPv6 OPTION packet.
(3) The server served as an RA client advertises the gateway by carrying DDNS-related information in an RS OPTION packet.

In step S606, the gateway acquires DDNS information of a LAN-side server, and then identifies an IPv6 address of the LAN-side server. Herein, the identification means includes ND protocol monitoring, DHCPv6 protocol.

In step S608, after the gateway identifies an IPv6 address of the server, an IP address is updated in the DDNS server in conjunction with the DDNS-related information of the server, and the gateway may replace a source address of a packet interacting with the server with an address of the LAN-side server according to different DDNS server requirements.

In step S610, after update is successful, a user at a Wide Area Network (WAN) can access the server through the DDNS domain name.

To sum up, by means of the method for updating an IP address provided in the above-mentioned embodiments and alternative embodiments of the present invention, a server is more simply switched into network application of an IPv6, and the server does not need to implement DDNS functions again, thereby contributing to popularization of an IPv6 network. Meanwhile, the method well reuses the DDNS functions of the gateway, and is also a low-cost solution.

Industrial applicability: From the above-mentioned description, it can be seen that in the present invention, a proxy server is used to send information of a pre-set server to a DDNS server corresponding to the pre-set server, to update an IP address of the DDNS server. Therefore, the problem in the related art of non-provision of a manner for updating an IP address of the LAN-side server in the DDNS server of an IPv6 network is solved, thereby implementing dynamic update of the IP address of the LAN-side server in the DDNS server of the IPv6 network. Compared with a manner for updating an IP address by directly using a pre-set server, a manner for updating an IP address by using a proxy server alleviates loads of the pre-set server, reduces the complexity of a migration process of a server from an IPv4 to an IPv6, and also reduces the cost of the migration process of the server from the IPv4 to the IPv6.

In another embodiment, software is also provided. The software is used to execute the technical solution described in the above-mentioned embodiments and alternative implementation manners.

In another embodiment, a storage medium is also provided. The above-mentioned software is stored in the storage medium. The storage medium includes, but not limited to, an optical disk, a floppy disk, a hard disk, an erasable memory and the like.

It is important to note that terms "first", "second" and the like in the description and claims and the drawings of the present invention are intended to distinguish similar objects, and do not intend to describe a specific sequence or a precedence order. It should be understood that objects used in such a way may be exchanged under appropriate conditions, in order that the embodiments of the present invention described here may be implemented in a sequence except sequences graphically shown or described here. In addition, terms "include" and "have" and any variations thereof are intended to cover non-exclusive inclusions. For example, processes, methods, systems, products or devices containing a series of steps or units do not need to be limited to those steps or units clearly shown, and can include other inherent steps or units of these processes, methods, products or devices, which are not clearly shown.

It is apparent to a person skilled in the art to understand that all of the above-mentioned modules or steps in the present invention may be implemented by using a general calculation device, and they may be centralized on a single calculation device or may be distributed on a network composed of multiple calculation devices. In an exemplary embodiment, they may be implemented by using executable program codes of the calculation devices. Thus, they may be stored in a storage device and executed by the calculation devices. And the shown or described steps may be executed in a sequence different from this sequence under certain conditions. Or each of they are manufactured into each integrated circuit module respectively, or multiple modules or steps therein are manufactured into a single integrated circuit module to implement. Thus, the present invention is not limited to a combination of any specific hardware and software.

The above embodiments are only the alternative embodiments of the present invention, and not intended to limit the present invention.

## Claims

1. A method for updating an Internet Protocol, IP, address, comprising:
acquiring (S102), by a proxy server, information of a pre-set server and Dynamic Domain Name Service, DDNS, server information of the pre-set server;
wherein the pre-set server is a Local Area Network, LAN-side server, and the DDNS server is on an IPv6 network;
identifying (S104), by the proxy server, an IP address of the pre-set server according to the information of the pre-set server; and
sending (S106), by the proxy server, the IP address to a DDNS server indicated by the DDNS server information,
wherein
the information of the pre-set server comprises a Media Access Control, MAC, address of the pre-set server; and
the DDNS server information comprises address information of the DDNS server,
wherein
the information of the pre-set server further comprises a domain name of the pre-set server registered on the DDNS server; and/or
the DDNS server information further comprises information for identity authentication on the DDNS server,
wherein the acquiring, by a proxy server, information of a pre-set server and DDNS server information of the pre-set server comprises:
acquiring, by the proxy server, the information of the pre-set server and the DDNS server information of the pre-set server in an automatic configuration manner,
wherein the acquiring, by the proxy server, the information of the pre-set server and the DDNS server information of the pre-set server in an automatic configuration manner comprises:
receiving, by the proxy server, a Dynamic Host Configuration Protocol for Internet Protocol Version 6, DHCPv6, packet or a Route Solicitation, RS, packet from the pre-set server, wherein the DHCPv6 packet or the RS packet carries the information of the pre-set server and the DDNS server information of the pre-set server.

2. The method according to claim 1, wherein the sending, by the proxy server, the IP address to a DDNS server indicated by the DDNS server information comprises:
replacing, by the proxy server, a source address of a packet which will be sent to the DDNS server with the address of the pre-set server, wherein the packet carries the IP address; and
sending, by the proxy server, the packet of which the source address is replaced to the DDNS server.

3. The method according to any one of claims 1 to 2, wherein the identifying, by the proxy server, an IP address of the pre-set server according to the information of the pre-set server comprises:
identifying, by the proxy server, the IP address of the pre-set server through a Neighbor Discovery, ND, protocol or a DHCPv6 protocol.

4. An apparatus for updating an Internet Protocol, IP, address, comprising means for carrying out the method of any of claims 1-3.

5. A gateway, comprising the apparatus for updating an IP address according to claim 4.

## Patentansprüche

1. Verfahren zum Aktualisieren einer Internetprotokoll(IP)adresse, Folgendes umfassend:
Erfassen (S102), durch einen Proxyserver, von Informationen eines voreingestellten Servers und von dynamischen Domänennamendienst(*Dynamic Domain Name Service* - DDNS)serverinformationen des voreingestellten Servers:
wobei der voreingestellte Server ein lokales Netzwerk(*Local Area Network-*LAN)-seitiger Server ist und der DDNS-Server auf einem Ipv6-Netzwerk ist;
Identifizieren (S104), durch den Proxyserver, einer IP-Adresse des voreingestellten Servers gemäß den Informationen des voreingestellten Servers; und
Senden (S106), durch den Proxyserver, der IP-Adresse an einen DDNS-Server, der durch die DDNS-Serverinformationen angezeigt wird, wobei die Informationen des voreingestellten Servers eine Mediumzugangssteuerungs(*Media Access Control* - MAC)adresse des voreingestellten Servers umfassen; und
die DDNS-Serverinformationen Adressinformationen des DDNS-Servers umfassen, wobei die Informationen des voreingestellten Servers ferner einen Domänennamen des auf dem DDNS-Server registrierten voreingestellten Servers umfassen; und/oder
die DDNS-Serverinformationen ferner Informationen für eine Identitätsauthentifizierung auf dem DDNS-Server umfassen, wobei das Erfassen durch einen Proxyserver, von Informationen eines voreingestellten Servers und von DDNS-Serverinformationen des voreingestellten Servers Folgendes umfasst:
Erfassen, durch den Proxyserver, der Informationen des voreingestellten Servers und der DDNS-Serverinformationen des voreingestellten Servers in einer automatischen Konfigurationsweise, wobei das Erfassen durch den Proxyserver der Informationen des voreingestellten Servers und der DDNS-Serverinformationen des voreingestellten Servers in einer automatischen Konfigurationsweise Folgendes umfasst:
Empfangen durch den Proxyserver eines dynamischen Hostkonfigurationsprotokolls für die Internetprotokollversion 6(*Dynamic Host Configuration Protocol for Internet Protocol Version 6* - DHCPv6)pakets oder eines Weganfrage(*Route Solicitation* - RS)pakets von dem voreingestellten Server, wobei das DHCPv6-Paket oder das RS-Packet die Informationen des voreingestellten Servers und die DDNS-Serverinformationen des voreingestellten Servers überträgt.

2. Verfahren nach Anspruch 1, wobei das Senden, durch den Proxyserver, der IP-Adresse an einen durch die DDNS-Serverinformationen angezeigten DDNS-Server Folgendes umfasst:
Ersetzen, durch den Proxyserver, einer Quelladresse eines Pakets, das an den DDNS-Server gesendet wird, mit der Adresse des voreingestellten Servers, wobei das Paket die IP-Adresse überträgt; und
Senden des Pakets, durch den Proxyserver, dessen Quelladresse ersetzt wird, an den DDNS-Server.

3. Verfahren nach einem der Ansprüche 1 bis 2, wobei das Identifizieren, durch den Proxyserver, einer IP-Adresse des voreingestellten Servers gemäß den Informationen des voreingestellten Servers Folgendes umfasst:
Identifizieren, durch den Proxyserver, einer IP-Adresse des voreingestellten Servers durch ein Nachbarsuche(*Neighbor Discovery -* ND)protokoll oder ein DHCPv6-Protokoll.

4. Vorrichtung zum Aktualisieren einer Internetprotokoll(IP)adresse, umfassend Mittel zum Ausführen des Verfahrens nach einem der Ansprüche 1-3.

5. Gateway, umfassend die Vorrichtung zum Aktualisieren einer IP-Adresse nach Anspruch 4.

## Revendications

1. Procédé pour mettre à jour une adresse de protocole Internet, IP, consistant à :
acquérir (S102), par un serveur proxy, des informations d'un serveur prédéfini et des informations de serveur du service de nom de domaine dynamique, DDNS, du serveur prédéfini :
dans lequel le serveur prédéfini est un réseau local, un serveur côté LAN, et le serveur DDNS est sur un réseau IPv6 ;
identifier (S104), par le serveur proxy, une adresse IP du serveur prédéfini selon des informations du serveur prédéfini ; et
envoyer (S106), par le serveur proxy, l'adresse IP à un serveur DDNS indiqué par les informations de serveur DDNS,
les informations du serveur prédéfini comprenant une adresse de commande d'accès au support, MAC, du serveur prédéfini ; et
les informations de serveur DDNS comprennent des informations d'adresse du serveur DDNS,
les informations du serveur prédéfini comprenant en outre un nom de domaine du serveur prédéfini enregistré sur le serveur DDNS ; et/ou
les informations de serveur DDNS comprennent en outre des informations d'authentification d'identité sur le serveur DDNS,
l'acquisition par un serveur proxy des informations d'un serveur prédéfini et des informations de serveur DDNS du serveur prédéfini consistant à :
acquérir, par le serveur proxy, les informations du serveur prédéfini et les informations du serveur DDNS du serveur prédéfini de manière à configurer automatiquement,
l'acquisition par le serveur proxy des informations du serveur prédéfini et les informations du serveur DDNS du serveur prédéfini de manière à configurer automatiquement consistant à :
recevoir, par le serveur proxy, un protocole de configuration d'hôte dynamique pour le paquet du protocole Internet version 6, DHCPv6, ou un paquet sollicitation de routage, RS, provenant du serveur prédéfini, le paquet DHCPv6 ou le paquet RS transportant les informations du serveur prédéfini et les informations du serveur DDNS du serveur prédéfini.

2. Procédé selon la revendication 1, dans lequel l'envoi, par le serveur proxy, de l'adresse IP à un serveur DDNS indiqué par les informations du serveur DDNS, consiste à :
remplacer, par le serveur proxy, une adresse source d'un paquet qui sera envoyé au serveur DDNS par l'adresse du serveur prédéfini, le paquet transportant l'adresse IP ; et
envoyer, par le serveur proxy, le paquet dont l'adresse source est remplacée vers le serveur DDNS.

3. Procédé selon l'une quelconque des revendications 1 à 2, dans lequel l'identification, par le serveur proxy, d'une adresse IP du serveur prédéfini selon les informations du serveur prédéfini consiste à :
identifier, par le serveur proxy, l'adresse IP du serveur prédéfini par l'intermédiaire d'un protocole de découverte de voisin, ND, ou un protocole DHCPv6.

4. Appareil pour mettre à jour une adresse de protocole Internet, IP, comprenant des moyens pour mettre en oeuvre le procédé selon l'une quelconque des revendications 1 à 3.

5. Passerelle, comprenant l'appareil pour mettre à jour une adresse IP selon la revendication 4.
